# EUROPEAN PATENT SPECIFICATION

(11) **EP 1 310 405 B1**
(45) Date of publication and mention of the grant of the patent: **03.06.2009**
(21) Application number: 02079716.3
(22) Date of filing: 13.11.2002
(51) Int. Cl.: B60P 3/42, B60P 3/32

(54) **Combination of a vehicle and a cabin**
Kombination eines Fahrzeuges und einer Kabine
Combinaison d'un véhicule et d'une cabine

(30) Priority: 13.11.2001 NL 1019360
(43) Date of publication of application: 14.05.2003
(73) Proprietor: Deelen, Cornelis Josephus Adrianus, 5712 JR Someren (NL)
(72) Inventor: Deelen, Cornelis Josephus Adrianus, 5712 JR Someren (NL)
(74) Representative: Verhees, Godefridus Josephus Maria

(56) References cited:
- EP-A- 0 182 303
- DE-U- 8 606 839
- DE-U- 8 903 475
- US-A- 3 659 894
- US-A- 3 820 833
- US-A- 4 605 258

## Description

### BACKGROUND OF THE INVENTION:

### Field of the invention

The invention relates to a combination of a vehicle and a cabin that is disconnectably coupled to the vehicle, which vehicle comprises a body with a driver's cab at the front and a loading platform at the rear, and which cabin comprises a number of walls including a floor. More particularly, the invention relates to a combination of a vehicle with a cabin for living in.

### Prior art

A similar combination is known from EP-A-0 182 303. In this known combination the cabin forms a living space and there is an opening in the cabin's front wall which makes a passageway between the cabin and the driver's cab. The vehicle has a loading platform at the rear in which the lower part of the cabin is situated. The part of the cabin above that extends to and beyond both sides of the loading platform. The disadvantage of this known combination is that when the cabin is used independently the space in the cabin is just as big as when it is coupled. In addition, the loading platform must always be empty if the cabin is coupled to the vehicle.

### Summary of the invention

An objective of the invention is to provide a combination of a vehicle and a cabin that is disconnectably coupled to the vehicle of the type described in the preamble in which the cabin can be used as an independent space better and in which the loading platform does not have to be empty before coupling the cabin to the vehicle. To this end, the combination according to the invention is **characterized in that** when the cabin is coupled to the vehicle at least one section of the cabin's floor forming an underside of the cabin and extending above the vehicle's loading platform is folded up so that an opening is made in the cabin's underside .

Because at least a part of the floor can fold up, it is possible to design a construction in which the space in the cabin when the floor is folded out is greater than the space in the cabin when it is coupled to the vehicle. This can be realized preferably by a construction in which when folded out the floor is situated lower than the floor of the vehicle's loading platform.

Before coupling the cabin to the vehicle, the floor section is folded up first, as a result of which the cabin is partially open on the underside. Because of this, any obstacles on the loading platform's floor will not form a hindrance during coupling and, therefore, the floor of the vehicle's loading platform does not have to be empty.

An embodiment of the combination according to the invention is **characterized in that** the cabin's walls further comprise two side walls and the vehicle's loading platform is bounded by two upright walls at the sides, and that two sections of the floor can fold up and are connected to the cabin's side walls by hinges, which floor sections when folded up are situated between the side walls of the vehicle's loading platform and the cabin's side walls. In this way when coupled, the folded-up floor sections do not reduce the space in the cabin. The floor sections preferably comprise four panels each that are hinged to each other along an axis in the longitudinal direction of the cabin and are connected to a side wall of the cabin.

A further embodiment of the combination is **characterized in that** the cabin's side walls extend to and beyond the loading platform's side walls. Because of this, the space in the cabin when the floor sections are folded out is even greater than the space in the cabin when it is coupled to the vehicle.

Still a further embodiment of the combination is **characterized in that** the cabin's walls comprise a front wall, of which at least a part can be folded up so that a further opening can be made. This opening can function as a passageway to the driver's cab. Preferably the front wall can fold upwards. The front wall comprises several panels, preferably two, which are connected by hinges to each other and to the cabin along an axis transverse to the cabin.

Again a further embodiment of the combination is **characterized in that** the cabin is provided with legs that can move between a position in which they support the cabin, so that it can stand independently in a position the same as when it is coupled to the vehicle, and in which the vehicle with the loading platform can be driven under the folded-up floor section, as well as a position in which they have no supporting function.

Preferably the legs comprise two front legs which are in or near the corners at the cabin's front, as well as at least one rear leg which, as viewed in the direction of travel, is situated behind the floor section that can fold up.

An embodiment of this is **characterized in that** the front legs can slide vertically in and out of guides situated on the cabin and can be locked and, furthermore, are provided with spindles, and that the cabin has two rear legs each of which is made up of a spindle situated in or near the corners at the cabin's rear, each spindle braced by bars which are at an angle with respect to each other. The two bars preferably form one unit.

In order to simplify the coupling of the vehicle to the cabin a further embodiment is **characterized in that** there are supporting surfaces on the vehicle and guide surfaces on the cabin for cooperating with the supporting surfaces while coupling the vehicle to the cabin, as well as contact surfaces for cooperating with the supporting surfaces when the vehicle and the cabin are coupled, in which the contact surfaces lock the supporting surfaces in various directions so that the cabin is properly positioned with respect to the vehicle, and where the guide surfaces guide the supporting surfaces to the contact surfaces during coupling. By driving the vehicle under the cabin standing on its legs, the cooperation of the guide surfaces and contact surfaces sees that the cabin ends up in the proper position on the vehicle. When coupled, the legs can then be slid in and/or screwed in and the cabin locked to the vehicle.

There are vehicles known with an open loading platform at the rear, in which there are a number of seats, known as cross-country vehicles. However, these known vehicles have a small load capacity and, therefore, are not suitable for application to a combination with a large, heavy cabin. Furthermore, there are vehicles known having an open loading platform and a large load capacity, the so-called pickup trucks. However, these vehicles are not fitted with seats and because of that they are less suitable as luxurious recreational vehicles.

Regarding the vehicle, the invention is **characterized in that** a number of seats are fixed to the loading platform, which are situated, as viewed in the direction of travel, in at least two rows one behind the other, and that the vehicle has a load capacity of at least 1200 kg. The vehicle is therefore a large convertible with a large load capacity as a result of which it is possible to couple a large cabin to it. Because of this the vehicle can therefore be used independently as a recreational vehicle, as well as in combination with a cabin as a camper van.

### Brief description of the drawings

The invention will be elucidated more fully below on the basis of drawings in which an embodiment of the combination of a vehicle and a cabin that can be coupled to the vehicle according to the invention is shown. In these drawings:
Figure 1 is a side view of the combination according to the invention;
Figure 2 is a side view of the combination's vehicle;
Figure 3 is a view in perspective of the combination's cabin;
Figure 4 is a detail of a folding floor section when folded out and when folded up;
Figure 5 is a view of the cabin's chassis with folded-up floor sections and a partially folded-up front wall;
Figure 6 is a view in perspective of the rearmost part of the cabin's chassis with the rear legs extended; and
Figure 7 is a detail of the coupling between the cabin and vehicle.

### Detailed description of the drawings

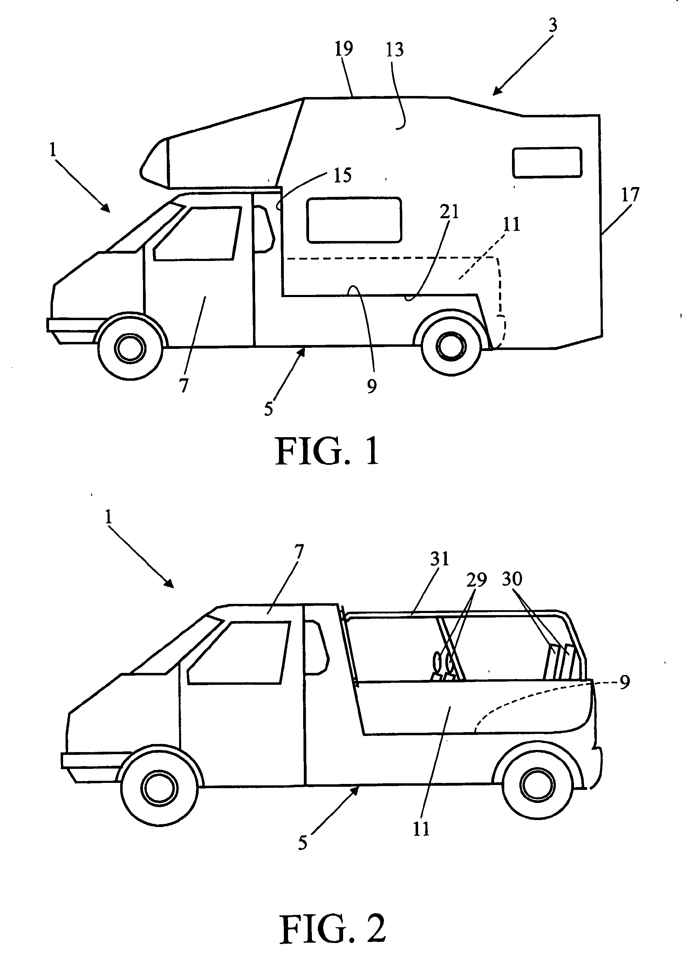

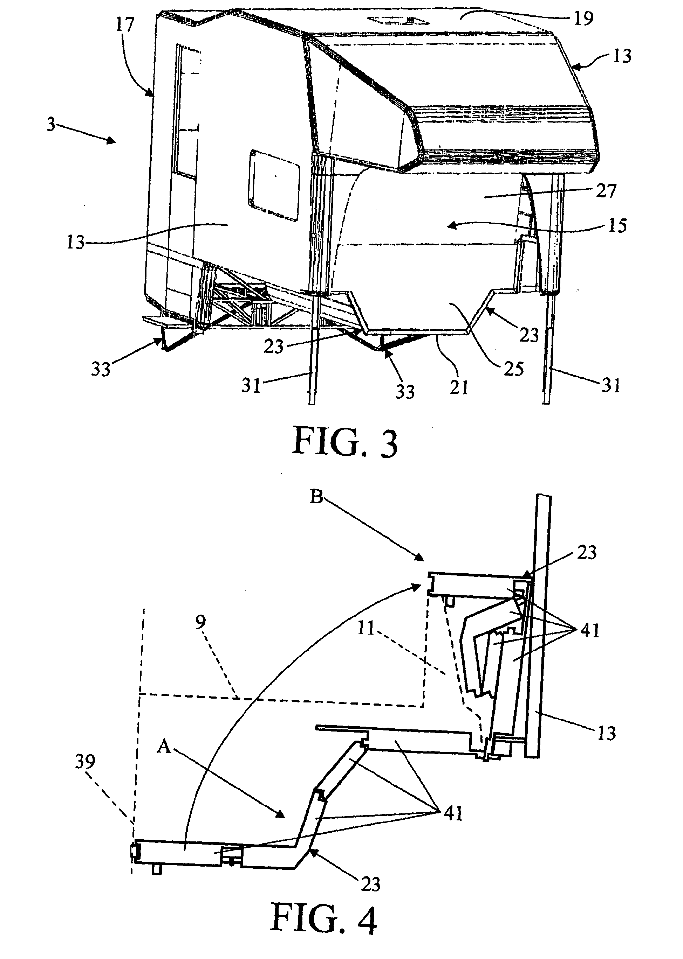

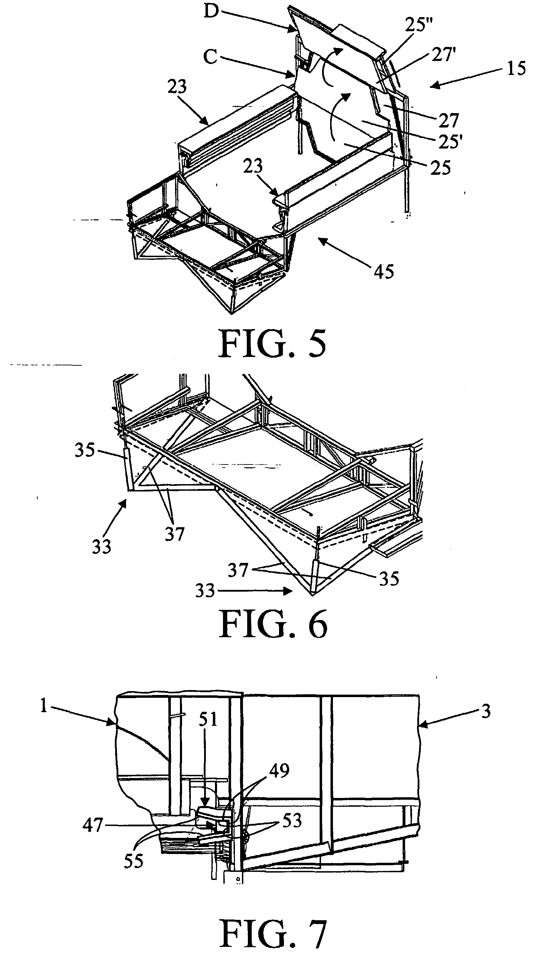

In Figure 1 a side view is shown of an embodiment of the combination of a vehicle 1 and a cabin 3 coupled to the vehicle according to the invention. The vehicle 1 has a body 5 with a driver's cab 7 at the front and at the rear a loading platform 9 which is bounded by two upright walls 11 at the sides, see Figure 2 as well. The vehicle 1 has a load capacity of at least 1200 kg for the purpose of carrying the cabin 3. The cabin 3 when uncoupled is bounded on all sides by walls, including two side walls 13, a front and a rear wall 15, 17 as well as a roof 19 and a floor 21, see Figure 3. When coupled (Figure 1) the floor sections 23 of the floor 21 and sections 25, 27 of the front wall are folded up, see Figures 4 and 5.

When uncoupled the vehicle's loading platform 9 forms an open space for seats, see Figure 2. A number of seats 29, 30 are fixed to the loading platform 9 which, as viewed in the direction of travel, are situated one behind the other. When folded down the seats 29, 30 can form a level floor. In this position, bars 31 are connected to the chassis of the vehicle 1, which function as roll bars. If necessary, a cover can be placed over the bars 31.

In Figure 3 the cabin 3 is shown when uncoupled as an independent living space. The cabin 3 has two front legs 31, which are situated in the corners at the cabin's front end, and two rear legs 33, situated behind the folding floor sections 23. The front and rear legs 31, 33 can move between a position in which they support the cabin (Figure 3) and a position in which they have no supporting function. When the cabin 3 is standing independently in this position, the vehicle 1 with the loading platform 9 and the side walls 11 can be driven under the cabin 3, provided that the floor sections 23 and the lower part 25 of the front wall 15 have been folded up.

The front legs 31 can slide vertically in and out of guides situated on the cabin and can be locked in an extended or retracted position. The front legs are also provided with spindles. These are handy when uncoupling the cabin from the vehicle. When coupled, first the front legs are extended to the ground and locked in this position. Next, the cabin is lifted up with the help of the spindles as a result of which it comes off the vehicle. The rear legs 33, see Figure 6, are made up of spindles 35, each braced by two bars 37 which are at an angle with respect to each other.

In Figure 4 a detail of a folding floor section 23 is shown when folded out A and when folded up B. The floor section 23 forms the part of the floor between a side wall 13 and the middle 39 of the cabin and its length is approximately the same as that of the vehicle's loading platform 9. The floor section 23 has four panels 41 connected to each other by hinges, which when folded up are situated between the cabin's side wall 13 and the vehicle's side wall 11. One of the panels when folded up forms a ledge 43.

As already mentioned parts of the front wall 15 of the cabin 3 can fold up. In Figure 5 a view of the cabin's chassis 45 is shown in which a front wall is partially folded up C and completely folded up D. Furthermore, the floor sections 23 are shown in this Figure when folded up. A lower section 25 of the front wall 15 is connected by hinges to the middle section 27 of the front wall 15, which again is connected to the cabin's chassis 45 by hinges. In position C the lower section 25 is folded upwards against the middle section 27. In position D both of these sections 25, 27 have been folded further upwards.

Figure 7 shows a detail of the coupling between the vehicle 1 and the cabin 3. There is a support 47 on the vehicle 1 which is provided with supporting surfaces 49. A bracket 51 is situated on the cabin 3 which is provided with contact surfaces 53 and guide surfaces 55. When coupling the vehicle 1 to the cabin 3, the support 47 on the vehicle comes between the V-shaped guide surfaces 55 of the bracket 51 on the cabin 3. In this process, the supporting surfaces 49 on the support 47 are guided by the guide surfaces 55 to the contact surfaces 53 of the bracket 51. The contact surfaces 53 position the support 47 in various directions so that the cabin 3 is situated in the position desired with respect to the vehicle 1.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Combination (1) of a vehicle (5) with a cabin (3) that is disconnectably coupled to the vehicle, which vehicle comprises a body with a driver's cab (7) at the front and a loading platform (9) at the rear, and which cabin comprises a number of walls including a floor (21), **characterized in that** when the cabin is coupled to the vehicle at least one section (23) of the cabin's floor (21) forming an underside of the cabin and extending above the vehicle's loading platform (9) is folded up so that an opening is made in the cabin's underside.

2. Combination (1) according to claim 1, **characterized in that** the cabin's walls, furthermore, comprise two side walls (13) and the vehicle's loading platform (9) is bounded at the sides by two upright walls (11), and that two sections (23) of the floor (21) are connected to the cabin (3) in such a way that they can fold up and are connected to the cabin's side walls (13) by hinges, which when folded up are situated between the side walls (11) of the vehicle's loading platform and the cabin's side walls (13).

3. Combination (1) according to claim 2, **characterized in that** the cabin's side walls (13) extend to and beyond the loading platform's side walls (11).

4. Combination (1) according to claim 1, 2 or 3, **characterized in that** the cabin's walls furthermore comprise a front wall (15), of which at least a part (25) can fold up so that a further opening can be made.

5. Combination (1) according to claim 4, **characterized in that** the front wall (15) can fold upwards.

6. Combination (1) according to one of the preceding claims, **characterized in that** the cabin (3) is provided with legs (31, 33) that can move between a position in which they support the cabin, so that it can stand independently in a position similar to the position when coupled to the vehicle (5), and in which the vehicle with the loading platform (9) can be driven under the folding floor section (23), as well as a position in which they have no supporting function.

7. Combination (1) according to claim 6, **characterized in that** the legs comprise two front legs (31) situated in or near the corners at the cabin's front, as well as at least one rear leg (33) which, as viewed in the direction of travel, is situated behind the floor section (23) that can fold up.

8. Combination (1) according to claim 7, **characterized in that** the front legs (31) can slide vertically in and out of guides on the cabin (3) and can be locked and, furthermore, are provided with spindles, and that the cabin has two rear legs (33) each of which is made up of a spindle (35) situated in or near the corners at the cabin's rear, each spindle braced by two bars (37) which are at an angle to each other.

9. Combination (1) according to one of the preceding claims, **characterized in that** there are supporting surfaces (49) on the vehicle (5) and guide surfaces (55) on the cabin (3) for cooperation with the vehicle's supporting surfaces when coupling the vehicle to the cabin, as well as contact surfaces (53) for cooperation with the supporting surfaces when the vehicle and the cabin are coupled, in which the contact surfaces (53) lock the supporting surfaces (49) in various directions so that the cabin is positioned properly with respect to the vehicle, and where the guide surfaces (55) guide the supporting surfaces (49) to the contact surfaces (53) during coupling.

10. Combination according to one of the preceding claims, **characterized in that** the vehicle (1) comprises a number of seats (29, 30) that are fixed to the loading platform, and which are situated in at least two rows one behind the other, as viewed in the direction of travel, and that the vehicle has a load capacity of at least 1200 kg.

## Patentansprüche

1. Kombination (1) aus einem Fahrzeug (5) und einer mit dem Fahrzeug trennbar verbundenen Kabine (3), wobei das Fahrzeug eine Karosserie umfasst, die an ihrer Vorderseite ein Fahrerhaus (7) und an ihrer Rückseite eine Ladefläche (9) aufweist, und wobei die Kabine mehrere Wände umfasst, darunter einen Fußboden (21), **dadurch gekennzeichnet, dass,** wenn die Kabine mit dem Fahrzeug verbunden ist, mindestens ein Bodenteil (23) des Fußbodens (21) der Kabine, der eine Unterseite der Kabine bildet und über die Ladefläche (9) des Fahrzeugs hinausreicht, zur Seite geklappt ist, so dass an der Unterseite der Kabine eine Öffnung entsteht.

2. Kombination (1) nach Anspruch 1, **dadurch gekennzeichnet, dass** die Wände der Kabine ferner zwei Seitenwände (13) umfassen und die Ladefläche (9) des Fahrzeugs an den Seiten durch zwei senkrechte Seitenwände (11) begrenzt wird, und dass die beiden Bodenteile (23) des Fußbodens (21) abklappbar sind und schwenkbar mit den Seitenwänden der Kabine (3) verbunden sind, wobei sich die Bodenteile in geklappter Stellung zwischen den Seitenwänden (11) der Ladefläche des Fahrzeugs und den Seitenwänden (13) der Kabine befinden.

3. Kombination (1) nach Anspruch 2, **dadurch gekennzeichnet, dass** die Seitenwände (13) der Kabine bis neben die Seitenwände (11) der Ladefläche reichen.

4. Kombination (1) nach Anspruch 1, 2 oder 3, **dadurch gekennzeichnet, dass** die Wände der Kabine ferner eine Stirnwand (15) umfassen, die sich ganz oder teilweise (25) wegklappen lässt, so dass eine weitere Öffnung gebildet werden kann.

5. Kombination (1) nach Anspruch 4, **dadurch gekennzeichnet, dass** die Stirnwand (15) nach oben geklappt werden kann.

6. Kombination (1) nach einem der vorangegangenen Ansprüche, **dadurch gekennzeichnet, dass** die Kabine (3) mit Stützen (31, 33) mit zwei möglichen Stellungen versehen ist, wobei sie in einer der Stellungen die Kabine so tragen, dass diese selbständig in einer dem an das Fahrzeug (5) angebauten Zustand entsprechenden Position aufgestellt werden kann und in der das Fahrzeug mit der Ladefläche (9) unter den abklappbaren Bodenteil (23) gefahren werden kann, und in der anderen Stellung keine tragende Funktion besitzen.

7. Kombination (1) nach Anspruch 6, **dadurch gekennzeichnet, dass** die Stützen zwei vordere Stützen (31) umfassen, die sich in den Ecken der Vorderseite der Kabine oder in deren Nähe befinden, sowie mindestens eine Heckstütze (33), die sich, in Fahrtrichtung gesehen, hinter dem abklappbaren Bodenteil (23) befindet.

8. Kombination (1) nach Anspruch 7, **dadurch gekennzeichnet, dass** die vorderen Stützen (31) mittels an der Kabine (3) vorhandener Führungen vertikal verschiebbar ausgeführt sind und über diese ein- und ausgefahren werden können, dass sie sich verriegeln lassen und ferner mit Spindeln versehen sind, und dass die Kabine zwei Heckstützen (33) besitzt, von denen jede durch eine Spindel (35) geformt wird, die sich in den Ecken an der Rückseite der Kabine oder in deren Nähe befinden und die durch zwei schräg zueinander angeordnete Stäbe (37) verstrebt sind.

9. Kombination (1) nach einem der vorangegangenen Ansprüche, **dadurch gekennzeichnet, dass** an dem Fahrzeug (5) Stützflächen (49) vorhanden sind und an der Kabine (3) Führungsflächen (55) vorhanden sind, die beim Anbau der Kabine an das Fahrzeug zusammenwirken, sowie Kontaktflächen (53), die, wenn die Kabine an das Fahrzeug angebaut ist, mit den Stützflächen zusammenwirken, wobei die Kontaktflächen (53) die Stützflächen (49) von mehreren Seiten umschließen, so dass die Kabine in einer bestimmten Stellung zu dem Fahrzeug positioniert ist, und wobei die Stützflächen (49) während des Anbauvorgangs von den Führungsflächen (55) zu den Kontaktflächen (53) geleitet werden.

10. Kombination (1) nach einem der vorangegangenen Ansprüche, **dadurch gekennzeichnet, dass** das Fahrzeug (5) über mehrere Sitze (29, 30) verfügt, die auf der Ladefläche (9) befestigt und in mindestens zwei Reihen angeordnet sind, die sich in Fahrtrichtung gesehen hintereinander befinden, und dass das Fahrzeug eine Zuladung von mindestens 1.200 Kilogramm besitzt.

## Revendications

1. Combinaison (1) d'un véhicule (5) et d'une cabine (3) couplée au véhicule de façon démontable, lequel véhicule comprend une carrosserie ayant un compartiment de conducteur (7) à l'avant et une plate-forme (9) à l'arrière, et laquelle cabine comprend un certain nombre de parois, parmi lesquelles un plancher (21), **caractérisée en ce que** si la cabine est couplée au véhicule, au moins une planche (23) du plancher (21) de la cabine formant une face inférieure de la cabine et s'étendant au dessus de la plate-forme (9) du véhicule, est rabattue, de telle sorte qu'une ouverture se forme dans la face inférieure de la cabine.

2. Combinaison (1) selon la revendication 1, **caractérisée en ce que** les parois de la cabine comprennent en outre deux parois latérales (13) et la plate-forme (9) du véhicule est délimitée sur les côtés par deux parois latérales relevées (11), et **en ce que** deux planches (23) du plancher (21) sont rabattables et sont reliées au moyen de charnières aux parois latérales de la cabine (3), où les planches, en position rabattue, se trouvent entre les parois latérales (11) de la plate-forme du véhicule et les parois latérales (13) de la cabine.

3. Combinaison (1) selon la revendication 2, **caractérisée en ce que** les parois latérales (13) de la cabine s'étendent jusque près des parois latérales (11) de la plate-forme.

4. Combinaison (1) selon la revendication 1, 2 ou 3, **caractérisée en ce que** les parois de la cabine comportent en outre une paroi avant (15), dont au moins une partie (25) est rabattable de telle sorte qu'une ouverture de plus peut être formée.

5. Combinaison (1) selon la revendication 4, **caractérisée en ce que** la paroi avant (15) est rabattable vers le haut.

6. Combinaison (1) selon une des revendications précédentes, **caractérisée en ce que** la cabine (3) est pourvue de pieds (31, 33) qui sont amovibles entre une position où ils supportent la cabine, de telle sorte que celle-ci peut se tenir debout de façon autonome dans une position identique à la position couplée au véhicule (5), et où le véhicule peut être conduit avec sa plate-forme (9) sous la planche rabattable (23), et une position où ils n'ont aucune fonction de support.

7. Combinaison (1) selon la revendication 6, **caractérisée en ce que** les pieds sont constitués de deux pieds avant (31) qui se trouvent dans les ou près des coins de l'avant de la cabine, ainsi que d'au moins un pied arrière (33) qui, vu dans le sens de la marche, se trouve derrière la planche rabattable (23).

8. Combinaison (1) selon la revendication 7, **caractérisée en ce que** les pieds avant (31) sont coulissants dans le sens vertical dans et hors des guidages présents sur la cabine (3), sont verrouillables et sont en outre pourvus de broches, et **en ce que** la cabine a deux pieds arrière (33) qui chacun est formé d'une broche (35) présente dans les ou près des coins à l'arrière de la cabine, lesquelles broches sont chacune étayée de deux barres (37) formant un angle l'une par rapport à l'autre.

9. Combinaison (1) selon une des revendications précédentes, **caractérisée en ce que** sur le véhicule (5) se trouvent des plans de soutien (49) et sur la cabine (3) se trouvent des plans de guidage (55), pour travailler de pair avec les plans de soutien pendant le couplage du véhicule à la cabine, ainsi que des plans de contact (53) pour travailler de pair avec les plans de soutien quand le véhicule et la cabine sont couplés, où les plans de contact (53) enferment les plans de soutien (49) dans plusieurs directions de telle sorte que la cabine se trouve dans une position vis-à-vis du véhicule, et où les plans de guidage (55) guident les plans de soutien (49) vers les plans de contact (53) pendant le couplage.

10. Combinaison (1) selon une des revendications précédentes, **caractérisée en ce que** le véhicule (5) comprend un certain nombre de sièges (29, 30) fixés sur la plate-forme (9), et placés sur au moins deux rangées qui, vu dans le sens de la marche, se trouvent l'une derrière l'autre, et **en ce que** le véhicule a une capacité de charge utile d'au moins 1200 kg.
